# EUROPEAN PATENT SPECIFICATION

(11) **EP 1 116 565 B1**
(45) Date of publication and mention of the grant of the patent: **16.04.2003**
(21) Application number: 01200086.5
(22) Date of filing: 11.01.2001
(51) Int. Cl.: B29C 45/00, A47H 15/04

(54) **Plastic glider for suspending curtains therefrom, and method and injection mold for manufacturing such a glider**
Kunststoffgleiter zum Aufhängen von Vorhängen, und Verfahren und Spritzgiessform zur Herstellung eines solchen Gleiters
Coulisseau en matière plastique pour suspendre des rideaux, et procédé et moule d'injection pour fabriquer un tel coulisseau

(30) Priority: 12.01.2000 NL 1014070
(43) Date of publication of application: 18.07.2001
(73) Proprietor: Goelst, Rolf Edward, 6716 AD Ede (NL)
(72) Inventor: ter Braak, Bart, 3941 WH Doorn (NL)
(74) Representative: Prins, Adrianus Willem

(56) References cited:
- EP-A- 0 601 663
- GB-A- 2 296 887
- BEALL G: "PLASTIC PART DESIGN FOR ECONOMICAL INJECTION MOULDING. PART 3-INCORPORATING HOLES & BOSSES" DESIGN ENGINEERING,GB,MORGAN-GRAMPIAN LTD. LONDON, September 1985 (1985-09), pages 75-76,78,80, XP002036568 ISSN: 0308-8448
- MICHAELI W ET AL: "BINDENAHTPROBLEME SYSTEMATISCH LÖSEN" PLASTVERARBEITER,DE,ZECHNER UND HUETHIG VERLAG GMBH. SPEYER/RHEIN, vol. 47, no. 6, June 1996 (1996-06), pages 82-83, XP000598614 ISSN: 0032-1338

## Description

The invention relates to a method for manufacturing at least one plastic glider comprising a body and a substantially U-shaped eye which has two legs connected with the body and an arch portion connecting the legs with each other at the ends remote from the body, the body having a section intended for slidable cooperation with a curtain rail, the substantially U-shaped eye being intended for hooking in a curtain hook, the glider being manufactured by means of an injection molding process in an injection mold which is provided with at least one injection mold cavity containing at least one glider cavity.

The invention also relates to a plastic glider manufactured in an injection mold cavity, which glider comprises a body and a substantially U-shaped eye which has two legs connected with the body and an arch portion connecting-the legs with each other at the ends remote from the body, the body having a section intended for slidable cooperation with a curtain rail, the U-shaped eye being intended for hooking in a curtain hook.

The invention further relates to an injection mold for manufacturing such a plastic glider, which injection mold is provided with at least one injection mold cavity, which injection mold cavity contains at least one glider cavity, each glider cavity comprising a body cavity and a U-shaped eye cavity, the eye cavity comprising two leg cavities connected with the body cavity and an arch portion cavity connecting the leg cavities with each other at the ends remote from the body cavity, a plastic supply channel discharging into each glider cavity.

It is a drawback of the method known e.g. from EP-A-0 601 663, plastic glider and injection mold that the gliders are injected therein via the body, that is to say at a point located diametrically opposite the arch portion of the U-shaped eye. As a result thereof, the plastic flows into the glider cavity of the injection mold symmetrically inwards and the U-shaped eye cavity is filled simultaneously via both leg cavities. Both plastic streams meet each other in the arch portion cavities, and exactly there a so-called flow joint therefore results. Such a flow joint forms a weak portion in the eventually molded product. It is a drawback of the known method, injection mold and the glider obtained therewith that the flow joint is located exactly at the point where the load of the glider is highest. The fact is that the curtain hooks which are hooked into the U-shaped eyes rest exactly on the arch portion of the U-shaped eye. In particular the glider located at the end of the curtain, which glider is often pulled to open and close the curtain, is loaded very heavily. In practice, this often leads to fracture of the U-shaped eye of the gliders. To limit this problem, concessions were often made in the past to the plastic from which the gliders are manufactured. A relatively strong plastic was used therefor, such as for instance pure polyamide. It is a drawback of this plastic, however, that the friction coefficient thereof is rather high, so that the glider is not smoothly movable along the curtain rail.

It is an object of the invention to provide a glider without the above-described drawbacks. It is also an object of the invention to provide a method and an injection mold by means of which such a glider can be manufactured. According to the invention the method of the type described in the opening paragraph is characterized in that the plastic is injected into the glider cavity from such a position that plastic streams formed in the glider cavity during the injection do not meet each other in the arch portion of the U-shaped eye.

According to the invention the plastic glider of the type described in the opening paragraph is characterized in that the or each flow joint, that is to say the or each joint formed owing to two plastic streams in the injection mold cavity touching each other there, is not located in the arch portion.

The injection mold of the type described in the opening paragraph is further characterized according to the invention in that the plastic supply channel discharges into the glider cavity such that during the filling of the glider cavity the plastic divides into at least two plastic streams, the positioning of the plastic supply channel being selected such that the or each flow joint, that is to say the or each joint formed owing to two plastic streams in the injection mold cavity touching each other there, is not formed in the arch portion cavity.

By means of the method and the injection mold a plastic glider is obtained in which no flow joint is located in the portion of the plastic glider which, in use, is critically loaded. As a result thereof, in the arch portion of the U-shaped eye, too, the glider will show an optimum plastic structure and, as a result thereof, an optimum strength. The strength profit made therewith is such that the glider can be manufactured from a mixture of polyamide with a number of components which reduce the friction coefficient, but which have the result that the strength decreases with respect to the pure polyamide hither used. The gliders manufactured from the polyamide mixture have the advantage that the gliders can be moved along the curtain rail with much less resistance.

According to a further elaboration of the invention the injection point of each glider is located in one of the legs of the glider. According to a further elaboration of the invention the injection mold is therefore characterized in that one plastic supply channel discharges into each glider cavity, the plastic supply channel discharging into a leg cavity near the body cavity. With such a positioning of the plastic supply channel it is ensured that no flow joint is formed in the arch portion of the U-shaped eye.

The invention also relates to a glider strip provided with a number of gliders according to the invention obtained with the method according to the invention, using an injection mold according to the invention, the gliders being connected with each other by a strip, such that the bodies of the gliders connected with the strip are in alignment.

Further elaborations of the invention are described in the subclaims and will be specified below with reference to the drawing.
Fig. 1 shows a partial top view of an injection mold cavity of a glider strip according to the prior art;
Fig. 2 shows a top view of an exemplary embodiment according to the invention of the injection mold cavity of two glider strips with the associated plastic supply channels;
Fig. 3 shows a detail of the injection mold cavity represented in Fig. 2;
Fig. 4 shows a front view of a plastic glider according to the invention;
Fig. 5 shows a side view of the plastic glider represented in Fig. 4; and
Fig. 6 show a cross-sectional view on the line VI-VI from Fig. 4.

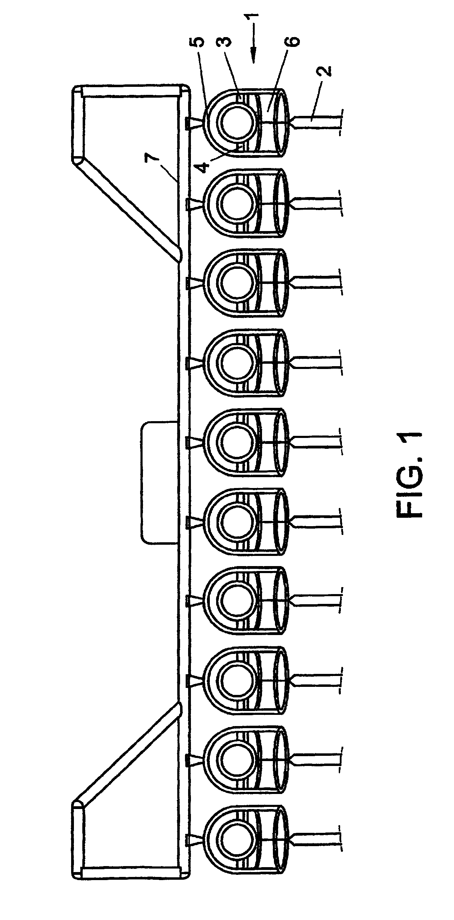

In the injection mold cavity according to the prior art partly represented in Fig. 1 it is clearly visible that a plastic supply channel 2 discharges into the glider cavity 1, that is to say into the portion of the body cavity 6 remote from the U-shaped eye cavity 3, 4, 5. The plastic supplied via the plastic supply channel 2 flows via the body cavity 6 to the U-shaped eye cavity and forms the U-shaped eye via both legs 3, 4 from two sides. Both plastic streams meet each other in the arch portion cavity 5 of the U-shaped eye cavity and form a flow joint there. From the arch portion cavity 5 the plastic flows further into the strip cavity 7 to form a plastic strip at which a number of gliders is formed. As a result of the above-described flow pattern, these known gliders have a flow joint in the region which, in use, is loaded most heavily, that is to say the arch portion of the U-shaped eye.

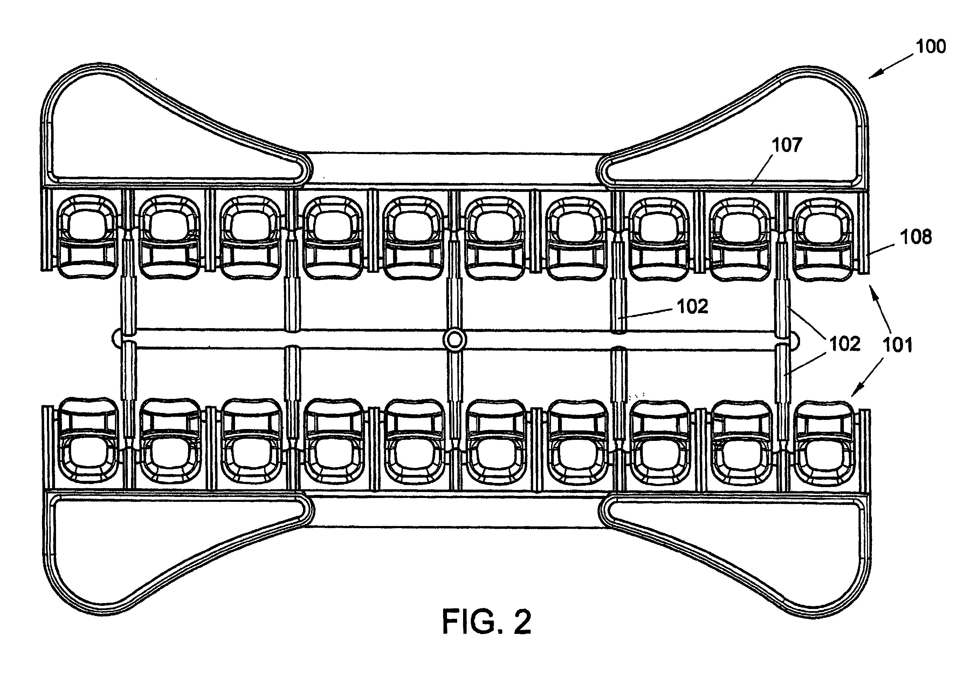

By means of the exemplary embodiment according to the invention of the injection mold cavity represented in Fig. 2 a glider 201 is obtained in which the flow joints G, H are located in regions in the plastic glider 201 which are loaded less heavily than the arch portion 205. For clarity's sake, for the description of the exemplary embodiment of the invention reference numerals will be used which correspond to the reference numerals used in Fig. 1, although increased by 100.

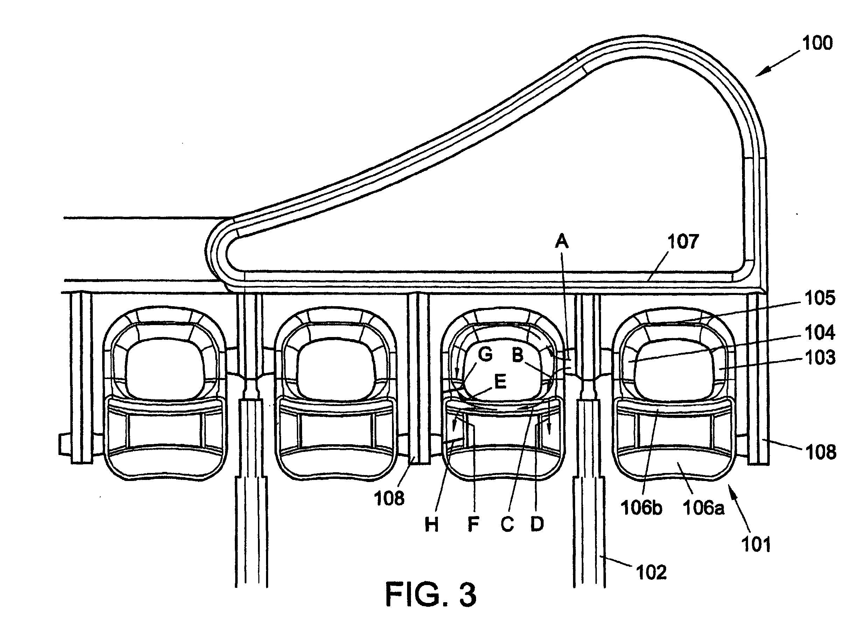

The injection mold cavity 100 represented in Fig. 2 is provided with a number of glider cavities 101. Connected to these glider cavities 101 are plastic supply channels 102. Furthermore, the glider cavities 101 have plastic discharge channels 108 connected to, which lead to a strip cavity 107 in which a plastic strip 207 is formed at which a number of plastic gliders 201 are formed. As visible in more detail in Fig. 3, each glider 201 has a body 206 which, in the present exemplary embodiment, has two bridge portions 206a, 206b. Furthermore, the glider is provided with a substantially U-shaped eye 203, 204, 205 which has two legs 203, 204 and an arch portion 205 connecting the legs 203, 204 with each other to form the eye.

During the filling of the glider cavity 101 with plastic the plastic flows from the plastic supply channel 102 into the glider cavity 101 and divides there into two streams A, B. Stream B flows to the body cavity 106 and, in turn, divides into two streams C, D which fill the bridge portion cavities 106a and 106b, respectively. Stream C then divides into two streams E, F. Stream E meets stream A in the leg cavity 104 near the body cavity 106 and forms a flow joint G there. Stream F meets stream D in the body cavity 106 and forms a flow joint H there. It may be clear that both flow joints G, H are not located in the most heavily loaded arch portion 205 of the plastic glider 201. From the flow joint H the plastic flows via the plastic discharge channel 108 to the strip cavity 7 and then fills the strip cavity 107 to form the strip 207.

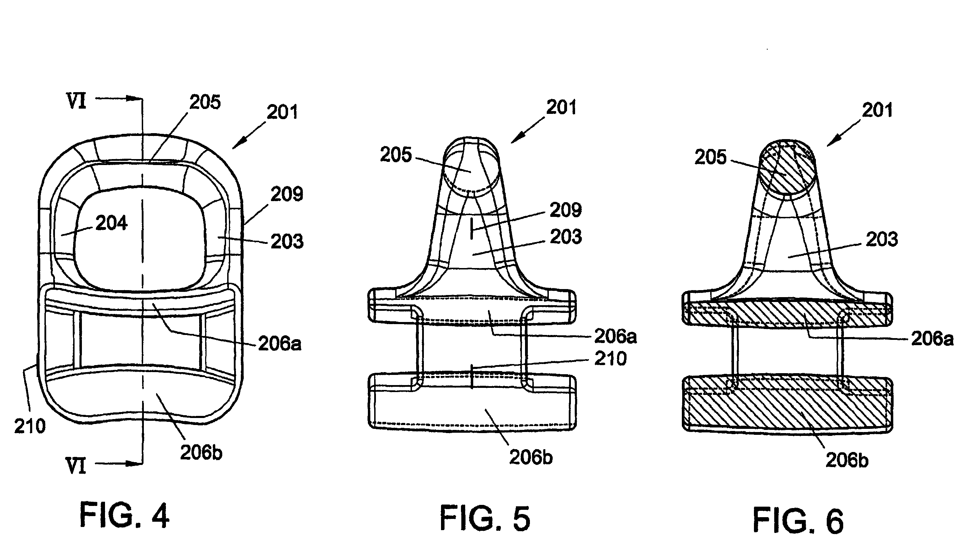

Figs. 4, 5, 6 once more show in detail the plastic glider 201 obtained by means of the method and the injection mold according to the invention. When indicating the different parts of the plastic glider 201, reference numerals are used which correspond to the reference numerals referring in Fig. 3 to cavities in an injection mold, although increased by 100. The injection point is located at position 209 indicated in Figs. 4, 5. The discharge point 210 of the plastic discharge channel 108 is also represented in Figs. 4 and 5. The plastic used is a plastic having polyamide as main component and additives ensuring that a lower friction coefficient is obtained, so that the gliders are easily movable along a curtain rail. The additives also ensure a substantial prolongation of life.

It may be clear that the invention is not limited to the described exemplary embodiment, but that various modifications are possible within the scope of the invention. Thus, the body which, in the present exemplary embodiment, is built up of two bridge portions 206a, 206b may also be of massive design and therefore consist of only one part. In that case the plastic glider will only contain one flow joint located approximately between the flow joints G and H as indicated in Fig. 3. In that case the flow joint is therefore located in the body 206 of the glider 201.

## Claims

1. A method for manufacturing at least one plastic glider (201) comprising a body (206) and a substantially U-shaped eye (203, 204, 205) which has two legs (203, 204) connected with the body (206) and an arch portion (205) connecting the legs (203, 204) with each other at the ends remote from the body (206), the body (206) having a section intended for slidable cooperation with a curtain rail, the U-shaped eye (203, 204, 205) being intended for hooking in a curtain hook, the glider (201) being manufactured by means of an injection molding process in an injection mold which is provided with at least one injection mold cavity (100) containing at least one glider cavity (101), **characterized in that** the plastic is injected into the glider cavity (101) from such a position that plastic streams (A, B, C, D, E, F) formed during the injection into the glider cavity (101) do not meet each other in the arch portion (205) of the U-shaped eye (203, 204, 205).

2. A plastic glider manufactured in an injection mold cavity, which glider (201) comprises a body (206) and a substantially U-shaped eye (203, 204, 205) which has two legs (203, 204) connected with the body (206) and an arch portion connecting the legs with each other at the ends remote from the body, the body (206) having a section intended for slidable cooperation with a curtain rail, the U-shaped eye (203, 204, 205) being intended for hooking in a curtain hook, **characterized in that** the or each flow joint (G, H), that is to say the or each joint (G, H) formed owing to two plastic streams (A, E; D, F) in the injection mold cavity touching each other there, is not located in the arch portion (205).

3. A plastic glider according to claim 2, **characterized in that** the injection point (209) of each glider (201) is located in one of the legs (203) of the glider (201).

4. A plastic glider according to claim 2 or 3, **characterized in that** the body comprises two bridge portions (206a, 206b), a first flow joint (G) being located in a leg (204) of the U-shaped eye (203, 204, 205) near the body (206), and a second flow joint (H) being located in the body (206).

5. A plastic glider according to claim 2 or 3, **characterized in that** the body (206) comprises a single massive plastic portion, a single flow joint being located in the body (206).

6. A plastic glider according to claim 2, **characterized in that** the glider (206) is manufactured from a mixture of polyamide and a number of additives which reduce the friction coefficient of the material.

7. An injection mold, provided with at least one injection mold cavity (100), which injection mold cavity (100) is provided with at least one glider cavity (101), each glider cavity (101) comprising a body cavity (106) and a U-shaped eye cavity (103, 104, 105), the eye cavity (103, 104, 105) comprising two leg cavities (103, 104) connected with the body cavity (106) and an arch portion cavity (105) connecting the leg cavities with each other at the ends remote from the body cavity (106), a plastic supply channel (102) discharging into each glider cavity (106), **characterized in that** the plastic supply channel (102) discharges into the glider cavity (101) such that during the filling of the glider cavity (101) the plastic divides into at least two plastic streams (A, B, C, D, E, F), the positioning of the plastic supply channel (102) being selected such that the or each flow joint (G, H), that is to say the or each flow joint (G, H) formed owing to two plastic streams (A, E; D, F) in the injection mold cavity touching each other there, is not formed in the arch portion cavity (105).

8. An injection mold according to claim 7, **characterized in that** one plastic supply channel (102) discharges into each glider cavity (101), the plastic supply channel (102) discharging into a leg cavity (103) near the body cavity (106).

9. An injection mold according to claim 7 or 8, **characterized in that** each glider cavity (101) also has a plastic discharge channel (108) connected thereto, the plastic discharge channel (108) being connected to the body cavity (106).

10. A glider strip, provided with a number of gliders (201) according to any one of claims 2-6, obtained by means of the method according to claim 1, using an injection mold according to any one of claims 7-9, the gliders (201) being connected with each other by a strip (207), such that the bodies (206) of the gliders (201) connected with the strip (207) are in alignment.

## Patentansprüche

1. Verfahren zur Herstellung mindestens eines Kunststoffgleiters (201) mit einem Körper (206) und einer im Wesentlichen U-förmigen Öse (203, 204, 205), die zwei Schenkel (203, 204) hat, welche mit dem Körper (206) verbunden sind, sowie einen Bogenabschnitt (205), der die Schenkel (203, 204) miteinander an den Enden verbindet, die von dem Körper (206) entfernt sind, wobei der Körper (206) einen Abschnitt aufweist, der zur gleitenden Zusammenwirkung mit einer Vorhangstange dienen soll, wobei die U-förmige Öse (203, 204, 205) zum Einhaken in einen Vorhanghaken dienen soll, wobei der Gleiter (201) mittels eines Spritzgießverfahrens und in einer Spritzgießform hergestellt wird, die mit mindestens einem Spritzgieß-Hohlraum (100) versehen ist, der mindestens einen Gleiter-Hohlraum (101) enthält, **dadurch gekennzeichnet, dass** der Kunststoff in den Gleiter-Hohlraum (101) von einer solchen Position eingespritzt wird, dass Kunststoffströme (A, B, C, D, E, F), die während des Einspritzens in den Gleiter-Hohlraum ausgebildet werden, nicht in dem Bogenabschnitt (205) der U-förmigen Öse (203, 204, 205) aufeinander treffen.

2. Kunststoffgleiter, hergestellt in einem Spritzgieß-Hohlraum, wobei der Gleiter (201) einen Körper (206) und eine im Wesentlichen U-förmige Öse (203, 204, 205) umfasst, die zwei Schenkel (203, 204) hat, welche mit dem Körper (206) verbunden sind, sowie einen Bogenabschnitt, welcher die Schenkel an den Enden, die vom Körper entfernt liegen, miteinander verbindet, wobei der Körper (206) einen Abschnitt aufweist, der zur gleitenden. Zusammenwirkung mit einer Vorhangstange dienen soll, wobei die U-förmige Öse (203, 204, 205) zum Einhaken in einen Vorhanghaken dienen soll, **dadurch gekennzeichnet, dass** die oder jede Strömungsverbindung (G, H), d. h. die oder jede Verbindung (G, H), die in den Spritzgieß-Hohlraum ausgebildet werden, weil zwei Kunststoffströme (A, E; D, F) dort miteinander in Berührung kommen, nicht in dem Bogenabschnitt (205) angeordnet ist.

3. Kunststoffgleiter nach Anspruch 2, **dadurch gekennzeichnet, dass** der Einspritzpunkt (209) jedes Gleiters (201) an einem der Schenkel (203) des Gleiters (201) angeordnet ist.

4. Kunststoffgleiter nach Anspruch 2 oder 3, **dadurch gekennzeichnet, dass** der Körper zwei Brückenabschnitte (206a, 206b) aufweist, wobei eine erste Strömungsverbindung (G) in einem Schenkel (204) der U-förmigen Öse (203, 204, 205) nahe dem Körper (206) angeordnet ist, und wobei eine zweite Strömungsverbindung (H) in dem Körper (206) angeordnet ist.

5. Kunststoffgleiter nach Anspruch 2 oder 3, **dadurch gekennzeichnet, dass** der Körper (206) einen einzelnen, massiven Kunststoffabschnitt umfasst, wobei eine einzige Strömungsverbindung in den Körper (206) angeordnet ist.

6. Kunststoffgleiter nach Anspruch 2, **dadurch gekennzeichnet, dass** der Gleiter (206) aus einem Gemisch aus Polyamid und einer Anzahl von Additiven hergestellt ist, welche den Reibungskoeffizienten des Materials verringern.

7. Spritzgießform, die mit mindestens einem Spritzgieß-Hohlraum (100) versehen ist, wobei der Spritzgieß-Hohlraum (100) mit mindestens einem Gleiter-Hohlraum (101) versehen ist, wobei jeder Gleiter-Hohlraum (101) einen Körper-Hohlraum (106) und einen Hohlraum (103, 104, 105) für eine U-förmige Öse umfasst, wobei der Ösen-Hohlraum (103, 104, 105) zwei Schenkel-Hohlräume (103, 104) umfasst, die mit dem Körper-Hohlraum (106) verbunden sowie einen Bogenabschnitts-Hohlraum (105), der die Schenkel-Hohlräume miteinander an den Enden, die von dem Körper-Hohlraum (106) entfernt sind, verbindet, wobei ein Kunststoff-Zuführungskanal (102) in jeden Gleiter-Hohlraum (106) hinein abführt, **dadurch gekennzeichnet, dass** der Kunststoff-Zuführungskanal (102) so in den Gleiter-Hohlraum (101) abführt, dass sich der Kunststoff-während des Füllens des Gleiter-Hohlraums (101) in mindestens zwei Kunststoffströme (A, B, C, D, -E, F) aufteilt, wobei die Positionierung des Kunststoff-Zuführungskanals (102) so gewählt wird, dass die oder jede Strömungsverbindung (G, H), d. h. die oder jede Strömungsverbindung (G, H), die in dem Spritzgieß-Hohlraum ausgebildet wird, weil zwei Kunststoffströme (A, E; D, F) dort aufeinander treffen, nicht in dem Bogenabschnitts-Hohlraum (105) ausgebildet ist.

8. Spritzgießform nach Anspruch 7, **dadurch gekennzeichnet, dass** ein Kunststoff-Zuführungskanal (102) in jeden Gleiter-Hohlraum (101) abführt, wobei der Kunststoff-Zuführungskanal (102) in einen Schenkel-Hohlraum (103) nahe dem Körper-Hohlraum (106) hinein abführt.

9. Spritzgießform nach Anspruch 7 oder 8, **dadurch gekennzeichnet, dass** jeder Gleiter-Hohlraum (101) ebenfalls einen Kunststoffabführungskanal (108) hat, der mit ihm verbunden ist, wobei der Kunststoffabführungskanal (108) mit dem Körper-Hohlraum (106) verbunden ist.

10. Gleiterstreifen, der mit einer Anzahl von Gleitern (101) gemäß einem der Ansprüche 2 bis 6 versehen ist, die erhalten werden mittels des Verfahrens gemäß Anspruch 1, unter Verwendung einer Spritzgießform gemäß einem der Ansprüche 7 bis 9, wobei die Gleiter (201) miteinander durch einen Streifen (207) verbunden sind, so dass die Körper (206) der Gleiter (201), die mit dem Streifen (207) verbunden sind, sich in Ausrichtung befinden.

## Revendications

1. Procédé de fabrication d'au moins un coulisseau en matière plastique (201) comprenant un corps (206) et un oeil sensiblement en forme de U (203, 204, 205) possédant deux branches (203, 204) reliées au corps (206) et une partie en forme d'arc (205) reliant les branches (203, 204) l'une avec l'autre aux extrémités distales du corps (206), le corps (210) comportant une parie destinée à fonctionner par glissement en association avec une tringle à rideau, et l'oeil en forme de U (203, 204, 205) étant destiné à s'accrocher dans un crochet de rideau, le coulisseau (201) étant fabriqué au moyen d'un procédé de moulage par injection dans un moule à injection qui est prévu avec au moins une cavité de moulage par injection (100) contenant au moins une cavité pour coulisseau (101), **caractérisé en ce que** la matière plastique est injectée dans la cavité pour coulisseau (101) à partir d'une position telle que les écoulements de matière plastique (A, B, C, D, E, F) formés au cours de l'injection dans la cavité pour coulisseau (101) ne se rencontrent pas l'un avec l'autre dans la partie en forme d'arc (205) de l'oeil en forme de U (203, 204, 205).

2. Coulisseau en matière plastique fabriqué dans une cavité de moulage par injection, lequel coulisseau (201) comprend un corps (206) et un oeil sensiblement en forme de U (203, 204, 205) qui possède deux branches (203, 204) reliées au corps (206) et une partie on forme d'arc (205) reliant les branches (203, 204) l'une avec l'autre aux extrémités distales du corps, le corps (206) comportant une partie destinée à fonctionner par glissement en association avec une tringle à rideau, et l'oeil en forme de U (203, 204, 205) étant destiné à s'accrocher dans un crochet de rideau, **caractérisé en ce que** la ou chaque jonction des écoulements (G, H), c'est-à-dire la ou chaque jonction des écoulements (G, H) formée du fait que les deux écoulements de matière plastique (A, E ; D, F) dans la cavité du moule à injection viennent en contact l'un avec l'autre, n'est pas située dans la partie en forme d'arc (205).

3. Coulisseau en matière plastique selon la revendication 2, **caractérisé en ce que** le point d'injection (209) de chaque coulisseau (201) est situé dans l'une des branches (203) du coulisseau (201).

4. Coulisseau en matière plastique selon la revendication 2 ou la revendication 3, **caractérisé en ce que** le corps comprend deux parties en forme de pont (206a, 206b), une première jonction d'écoulements (G) étant située dans une branche (204) de l'oeil en forme de U (203, 204, 205) au voisinage du corps (206), et une deuxième jonction d'écoulements (H) étant située dans le corps (206).

5. Coulisseau en matière plastique selon la revendication 2 ou la revendication 3, **caractérisé en ce que** le corps (206) comprend une partie plastique massive unique, une jonction d'écoulements unique étant située dans le corps (206).

6. Coulisseau en matière plastique selon la revendication 2, **caractérise en ce que** le patin (201) est fabriqué à partir d'un mélange de polyamide et d'un certain nombre d'additifs qui réduisent le coefficient de frottement du matériel.

7. Moule à injection, comportant au moins une cavité de moulage par injection (100), laquelle cavité de moulage (100) est équipée d'au moins une cavité pour coulisseau (101), chaque cavité pour coulisseau (101) comprenant une cavité pour corps (106), et une cavité pour oeil en forme de U (103, 104, 105), la cavité pour oeil (103, 104, 105) comprenant deux cavités pour branches (103, 104) reliées avec la cavité pour corps (106), et une cavité en forme d'arc (105) reliant l'une à l'autre les cavités pour branches aux extrémités distales de la cavité pour corps (106), un canal d'alimentation (102) de matière plastique débouchant dans chaque cavité pour coulisseau (106), **caractérisé en ce que** le canal d'alimentation (102) de matière plastique débouche dans la cavité pour coulisseau (101) de telle sorte que, pendant le remplissage de la cavité pour coulisseau (101), la matière plastique se subdivise en au moins deux écoulements de matière plastique (A, B, C, D, E, F), le positionnement du canal d'alimentation en matière plastique (102) étant choisi de telle sorte que le ou chaque point de jonction d'écoulements (G, H), c'est-à-dire la ou chaque jonction des écoulements (C, H) formée du fait que les deux écoulements de matière plastique (A, E ; D, F) dans la cavité du moule à injection viennent en contact l'un avec l'autre, n'est pas située dans la partie en forme d'arc (205).

8. Moule à injection selon la revendication 7, **caractérisé en ce qu'**un canal d'alimentation en matière plastique (102) débouche dans chaque cavité pour coulisseau (101), le canal d'alimentation en matière plastique (102) débouchant dans une cavité pour branche (103) au voisinage de la cavité pour corps (106).

9. Moule à injection selon la revendication 7 ou la revendication 8, **caractérisé en ce que** chaque cavité pour coulisseau (101) possède également un canal d'écoulement de matière plastique (108) qui lui est relié, le canal d'écoulement de matière plastique (108) étant relié à la cavité pour corps (106).

10. Bande de coulisseaux, comportant un certain nombre de coulisseaux (201) selon l'une quelconque des revendications 2 à 6, obtenus au moyen du procédé selon la revendication 1, utilisant un moule à injection selon l'une quelconque des revendications 7 à 9, les coulisseaux (201) étant reliés l'un à l'autre par une bande (207), de telle façon que les corps (206) des coulisseaux (201) reliés par la bande (207) soient disposés en alignement,
